# EUROPEAN PATENT SPECIFICATION

(11) **EP 3 018 415 B1**
(45) Date of publication and mention of the grant of the patent: **01.01.2020**
(21) Application number: 15193471.8
(22) Date of filing: 06.11.2015
(51) Int. Cl.: F23R 3/00, F23R 3/06

(54) **COMBUSTOR DILUTION HOLE COOLING**
KÜHLUNG EINES BRENNKAMMERVERDÜNNUNGSLOCHS
REFROIDISSEMENT DE TROU DE DILUTION DE CHAMBRE DE COMBUSTION

(30) Priority: 07.11.2014 US 201462076818 P
(43) Date of publication of application: 11.05.2016
(73) Proprietor: United Technologies Corporation, Farmington, CT 06032 (US)
(72) Inventor: BURD, Steven W., Cheshire, CT Connecticut 06410 (US)
(74) Representative: Dehns

(56) References cited:
- EP-A1- 1 939 529
- EP-A2- 0 816 010
- EP-A2- 1 635 119
- EP-A2- 2 511 475
- EP-A2- 2 518 270
- US-A- 4 004 056
- US-A1- 2014 083 112
- US-A1- 2014 260 282

## Description

### BACKGROUND

Gas turbine combustors are typically configured with air feed, dilution and/or trim holes that project through the inner and outer walls of the combustor. These holes provide pressurized feed air to the combustor that is necessary to support combustion of an internal fuel-air mixture. Other holes provide air flow that is designed to tailor the combustion spatially and temporally within the combustor to benefit emissions, performance or the temperature characteristics at the aft end of the combustor that enters a downstream turbine.

The air that comes out of one or more of the holes described above interacts with the fuel-air mixture in the combustor. This air usually enters the combustor with enough momentum to act like an air jet in cross-flow. An air jet in cross-flow is representative of a complex interaction and results in combustor liner distress (i.e., oxidation) local to dilution and trim holes. This occurs for several reasons. The presence of this jet disturbs the approaching flow along the walls of the liner and pressure gradients within the combustor, and promotes the formation of secondary flow or vortical structures. These secondary flows and vortical structures disrupt (and reduce) the cooling in the vicinity of the combustor liners by mixing with the cooling air and driving hot gases from the combustion process to the liner surfaces. Since this mixture is undergoing combustion, it can exceed the melting point of the combustor liner materials. In addition, the air jets provide a blockage for the approaching flow. This means that the flows need to accelerate around the dilution holes increasing the heat transfer and the strength of the local secondary flows. Moreover, the jet in cross-flow creates a wake that promotes a downwash of hot gases around the holes. The interaction with the approaching flow may not be uniform given swirl and non-homogeneous fuel-air distributions produced by the forward fuels nozzles, air swirlers, cooling air and air introduction. This can create a biased distress pattern on the combustor liner.

EP 2518270 A2 has been deemed to disclose the features of the preamble of claim 1.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

The invention is directed to a method for forming a cooling circuit as claimed in claim 1. In some embodiments, the substrate and the cooling circuit in said substrate are produced via one of the following: casting with a surface profile to create the cooling circuit. In some embodiments, the material comprises at least one of: at least one of a core or refractory material, or at least one of a maskant or shadow material. In some embodiments, the at least one of coating or plating comprises an application of a bond coat. In some embodiments, the method further comprises removing the insert material. In some embodiments, the insert material is removed using at least one of: etching, application of a chemical, or a thermal technique. In some embodiments, the method further comprises applying part post-processing. In some embodiments, the part post-processing comprises application of at least one of: a thermal barrier coating, an environmental barrier coating, a corrosion coating, a laser, grind machining, or electrodischarge machining.

The invention is also directed to a combustor panel or a liner wall of an aircraft engine as claimed in claim 9. In some embodiments, the cooling circuit is formed based on a removal of an insert material.

In some embodiments, the combustor panel or liner wall further comprises a metal coating or plating coupled to a surface of the substrate. In some embodiments, the aperture comprises at least one of: a first hole that is configured to supply air to a combustion of a fuel-air mixture, a second hole configured to accommodate at least one of: an ignitor, a probe, or a sensor, or a third hole in a bulkhead. In some embodiments, the first hole comprises at least one of a dilution hole, a trim hole, or a feed hole. In some embodiments, the cooling circuit is at least one of: adjacent to a grommet, integral to the grommet, or partially incorporated in the grommet.

### BRIEF DESCRIPTION OF THE DRAWINGS

The present disclosure is illustrated by way of example and not limited in the accompanying figures in which like reference numerals indicate similar elements.
FIG. 1A is a schematic cross-section of an exemplary gas turbine engine.
FIG. 1B is a partial cross-section of a combustor of the engine of FIG. 1A.
FIG. 2 illustrates a portion of an interface associated with the engine of FIG. 1A.
FIG. 3A illustrates a flow chart of a method outside the scope of claim 1 for producing a cooling circuit in a local region of a combustor panel on a hot side of the panel.
FIG. 3B illustrates the production of the cooling circuit in accordance with the method of FIG. 3A.
FIG. 4A illustrates a flow chart of an exemplary method for producing a cooling circuit in a local region of a combustor panel on a cold side of the panel, which is in accordance with the invention.
FIG. 4B illustrates the production of the cooling circuit in accordance with the method of FIG. 4A.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems and methods are described for cooling a liner (e.g., a liner panel) of an aircraft combustor. One or more cooling circuits may be provided in local regions of combustor panels. A skeletal version of the panel may be provided with cooling channel geometries detailed in the part. The cooling channels are "filled" with an insert in the manner described further below. The combination of the cooling channel and the insert is subsequently coated or plated with a metal coating (i.e. bond coat) or plating to encapsulate the cooling channels and to form a flowpath mean line or back surface of the part. The insert of filler is then removed via one of multiple methods and the part is post-processed to obtain a final configuration.

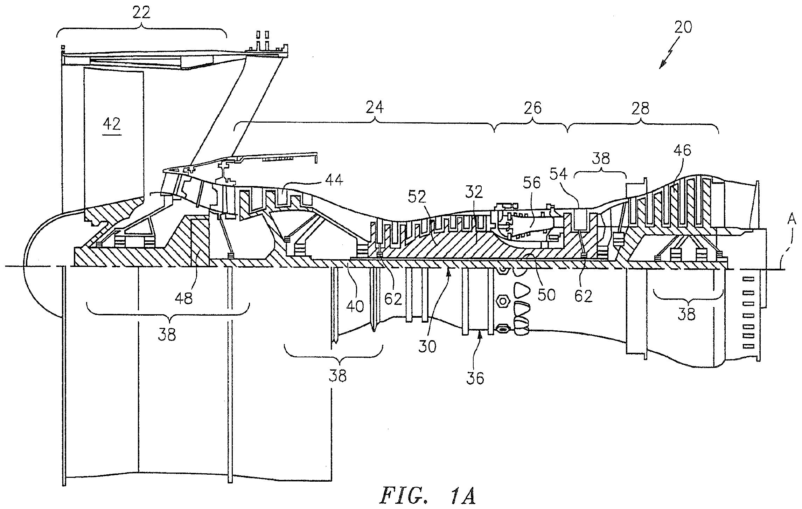

FIG. 1A schematically illustrates a gas turbine engine 20. The gas turbine engine 20 is disclosed herein as a two-spool turbo fan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engines such as turbojets, turboshafts, and three-spool (plus fan) turbofans wherein an intermediate spool includes an intermediate pressure compressor ("IPC") between a Low Pressure Compressor ("LPC") and a High Pressure Compressor ("HPC"), and an Intermediate Pressure Turbine ("IPT") between the High Pressure Turbine ("HPT") and the Low Pressure Turbine ("LPT").

The engine 20 generally includes a low spool 30 and a high spool 32 mounted for rotation about an engine central longitudinal axis A relative to an engine static structure 36 or engine case via several bearing structures 38. The low spool 30 generally includes an inner shaft 40 that interconnects a fan 42 of the fan section 22, a LPC 44 of the compressor section 24 and a LPT 46 of the turbine section 28. The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a HPC 52 of the compressor section 24 and HPT 54 of the turbine section 28. A combustor 56 is arranged between the HPC 52 and the HPT 54. The inner shaft 40 and the outer shaft 50 are concentric and rotate about the engine central longitudinal axis A that is collinear with their longitudinal axes. Core airflow is compressed by the LPC 44 then the HPC 52, mixed with the fuel and burned in the combustor 56, then expanded over the HPT 54 and the LPT 46. The LPT 46 and HPT 54 rotationally drive the respective low spool 30 and high spool 32 in response to the expansion.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3:1, and in another example is greater than about 2.5:1. The geared turbofan enables operation of the low spool 30 at higher speeds that can increase the operational efficiency of the LPC 44 and LPT 46 and render increased pressure in a fewer number of stages.

A pressure ratio associated with the LPT 46 is pressure measured prior to the inlet of the LPT 46 as related to the pressure at the outlet of the LPT 46 prior to an exhaust nozzle of the gas turbine engine 20. In one non-limiting embodiment, the bypass ratio of the gas turbine engine 20 is greater than about ten (10:1), the fan diameter is significantly larger than that of the LPC 44, and the LPT 46 has a pressure ratio that is greater than about five (5:1). It should be understood; however, that the above parameters are only exemplary of one embodiment of a geared architecture engine and that the present disclosure is applicable to other gas turbine engines including direct drive turbofans.

In one embodiment, a significant amount of thrust is provided by the bypass flow path B due to the high bypass ratio. The fan section 22 is designed for a particular flight condition - typically cruise at about 0.8 Mach and about 35,000 feet (10,668 meters). This flight condition, with the gas turbine engine 20 at its best fuel consumption, is also known as Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane System. The low Fan Pressure Ratio according to one, non-limiting, embodiment of the example gas turbine engine 20 is less than 1.45. Low Corrected Fan Tip Speed is the actual fan tip speed divided by an industry standard temperature correction of ("T" / 518.7)^{0.5} in which "T" represents the ambient temperature in degrees Rankine. The Low Corrected Fan Tip Speed according to one non-limiting embodiment of the example gas turbine engine 20 is less than about 1,150 feet per second (351 meters per second).

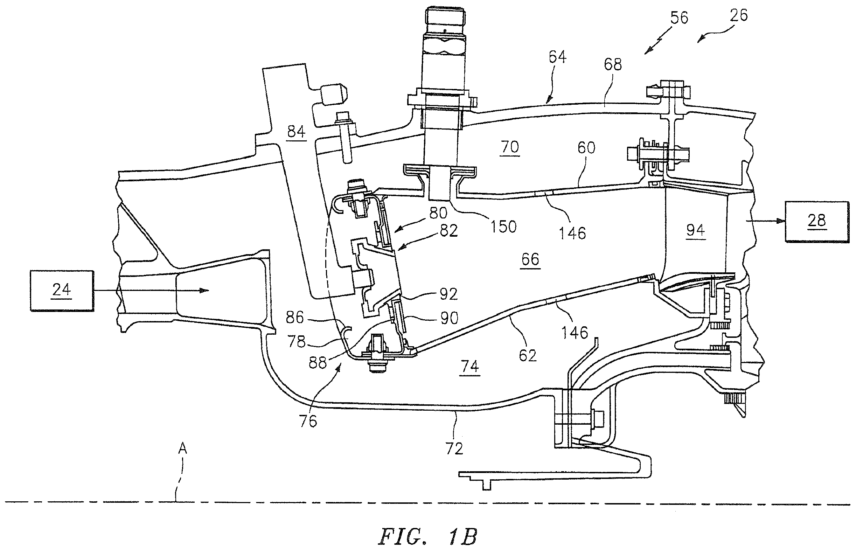

With reference to FIG. 1B, the combustor section 26 generally includes a single-walled combustor 56 with a multi-layered outer wall 60, a multi-layered inner wall 62, and a diffuser case module 64 that encases walls 60, 62. The outer wall 60 and the inner wall 62 are radially spaced apart such that an annular combustion chamber 66 is defined therebetween. The outer wall 60 is spaced radially inward from an outer diffuser case 68 of the diffuser case module 64 to define an outer annular plenum 70. The inner wall 62 is spaced radially outward from an inner diffuser case 72 of the diffuser case module 64 to define an inner annular plenum 74. The term "single-walled combustor" reflects the difference between more traditional combustors that utilize a dual-walled orientation with the inner and outer walls each having a shell spaced from a liner. It should be understood that although a particular combustor is illustrated, other combustor types with various combustor wall arrangements will also benefit. It should be further understood that the disclosed cooling flow paths are but an illustrated embodiment and should not be limited.

The combustion chamber 66 contains the combustion products that flow axially toward the turbine section 28. Each combustor wall 60, 62 may be generally cylindrical and extend circumferentially about the engine axis. The walls 60, 62 may each be a single panel or formed utilizing a plurality of panels. The panel(s) may be circumferentially continuous (e.g., ring shaped) and divided axially, may be divided circumferentially from each, or both (e.g., substantially rectilinear in shape).

The combustor 56 further includes a forward assembly 76 immediately downstream of the compressor section 24 to receive compressed airflow therefrom. The forward assembly 76 generally includes an annular hood 78, a bulkhead assembly 80, and a plurality of swirlers 82 (one shown). Each of the swirlers 82 is circumferentially aligned with one of a plurality of fuel nozzles 84 (one shown) and a respective one of a plurality of hood ports 86. The bulkhead assembly 80 includes a bulkhead support shell 88 secured to the combustor walls 60, 62, and a plurality of circumferentially distributed bulkhead heat shields or panels 90 secured to the bulkhead support shell 88 around each of a respective swirler opening 92. The bulkhead support shell 88 is generally annular and the plurality of circumferentially distributed bulkhead panels 90 are segmented, typically one to each fuel nozzle 84 and swirler 82. It is further contemplated and understood that the heat shield(s) 90 and support shell(s) 88 may be replaced with a multi-layered, single, wall similar to the walls 60, 62.

The annular hood 78 extends radially between, and is secured to, the forwardmost ends of the combustor walls 60, 62. Each one of the plurality of circumferentially distributed hood ports 86 receives a respective one of the plurality of fuel nozzles 84 and facilitates the direction of compressed air into the forward end of the combustion chamber 66 through the swirler opening 92. Each fuel nozzle 84 may be secured to the diffuser case module 64 and projects through one of the hood ports 86 into the respective swirler opening 92.

The forward assembly 76 introduces core combustion air into the forward section of the combustion chamber 66 while the remainder enters the outer annular plenum 72 and the inner annular plenum 74. The plurality of fuel nozzles 84 and adjacent structure generate a blended fuel-air mixture that supports stable combustion in the combustion chamber 66.

Opposite the forward assembly 76, the outer and inner walls 60, 62 may be mounted adjacent to a first row of Nozzle Guide Vanes (NGVs) 94 in the HPT 54. The NGVs 94 are static engine components that direct core airflow combustion gases onto the turbine blades of the first turbine rotor in the turbine section 28 to facilitate the conversion of pressure energy into kinetic energy. The core airflow combustion gases are also accelerated by the NGVs 94 because of their convergent shape and are typically given a "spin" or a "swirl" in the direction of turbine rotor rotation. The turbine rotor blades absorb this energy to drive the turbine rotor at high speed.

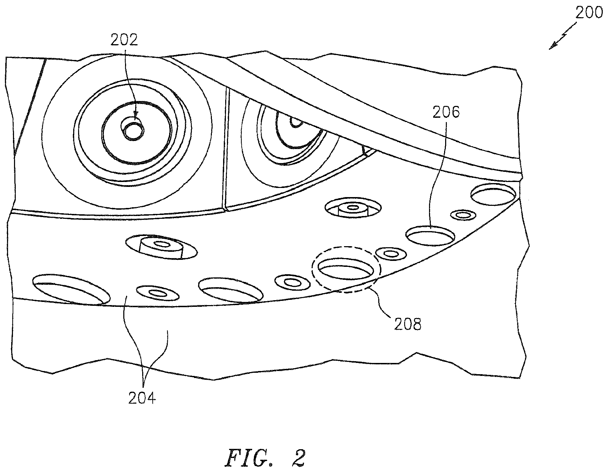

Referring to FIG. 2, an interface 200 to the engine 20 of FIG. 1A is shown. The interface 200 includes a swirler and fuel nozzle 202 that may be used to supply a mixture of air and fuel to the combustion chamber 66 for combustion. One or more combustor panels 204 may provide a casing or enclosure for the engine 20, where the panels 204 may correspond to, or be associated with, one or both of the walls 60 and 62 of FIG. 1B. Dilution/trim holes 206 may supply air for regulating/maintaining the combustion. Due to high temperatures as well as a relatively large mass of material (e.g., grommet) around the holes 206, the panels 204 may be distressed in the proximity of the holes 206 as shown via reference character 208. Such distress 208 may take the form of, or include, oxidation or melting. Aspects of the disclosure may be directed to minimizing/reducing the extent or level of the distress 208.

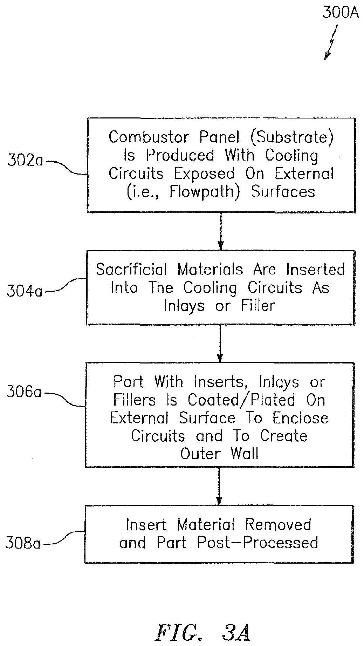

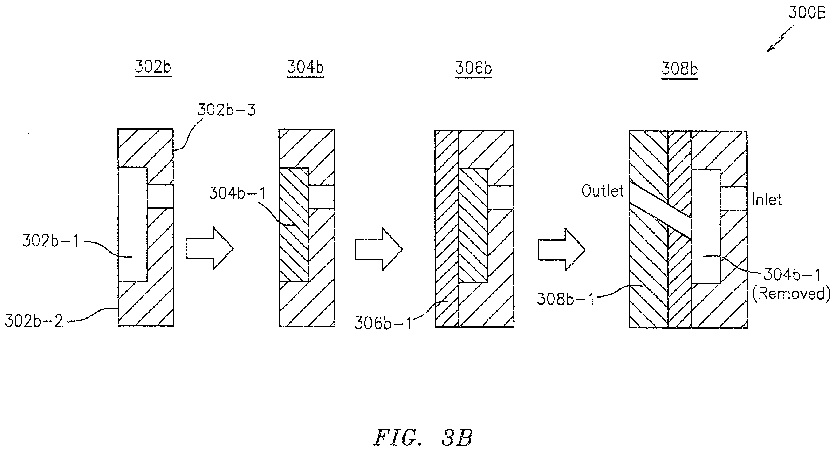

Referring to FIGS. 3A-3B, a flowchart of a method 300A for making a cooling circuit 300B not according to the invention is shown. In FIG. 3B, the making of the cooling circuit 300B is shown in discrete steps or stages 302b-308b, coinciding with the respective steps/blocks 302a-308a of the method 300A of FIG. 3A. The method 300A may be executed in order to provide a cooling circuit 300B on a hot side of a panel.

In block 302a, a combustor panel (substrate) is produced with cooling circuits 302b-1 exposed on external (i.e., flowpath) surfaces 302b-2 (relative to an inner wall 302b-3 that is opposite the flowpath) as shown in 302b. In some embodiments, the substrate and the cooling circuits 302b-1 in the substrate are produced via one of the following: casting with an external surface profile to create the cooling circuit, casting with at least one external or surface core to create the cooling circuit, casting with a machined surface to create the cooling circuit, forging or sheet metal with a machined or formed cooling circuit, using a ceramic or a composite with a machined or fabricated cooling circuit, or using an additive manufacturing technique.

In block 304a, one or more insert materials 304b-1 are inserted into the cooling circuits 302b-1 as inlays or filler as shown in 304b. In connection with block 304a, core/refractory shapes as cooling circuit inlays 304b-1 may be provided with treatment, cure, etc. Core/refractory materials may be inserted into the cooling circuits 302b-1 as filler material. Maskant/shadow materials (e.g., polymer-based) may be used for the insert 304b-1.

In block 306a, and not in accordance with the invention, a metal coating or plating 306b-1 is added on the external surface 302b-2 to enclose the circuit 302b-1 and to create an outer wall as shown in 306b. The coating/plating 306b-1 may be used to create a missing side of the enclosed cooling circuit 302b-1. In connection with block 306a, a bond coating may be used to apply to metal; plasma spray or deposition techniques may be used in some embodiments. Block 306a may adhere to one or more high-temperature plating specifications.

In block 308a, the insert 304b-1 is removed and part post-processing 308b-1 may be applied as shown in 308b. The application of the post-processing 308b-1 may take the form, for example, of a thermal barrier coating (TBC), an environmental barrier coating (EBC), a corrosion coating, application of a laser, grind machining, electrodischarge machining, etc. The insert 304b-1 may be removed via etching, application of a chemical (e.g., application of a solution), a thermal technique (e.g., heat treat/furnace), or any other technique.

Superimposed in FIG. 3B (308b) are labels "inlet" and "outlet." Cooling air would enter via the inlet and exit via the outlet, where the outlet would interface with the chamber of the engine.

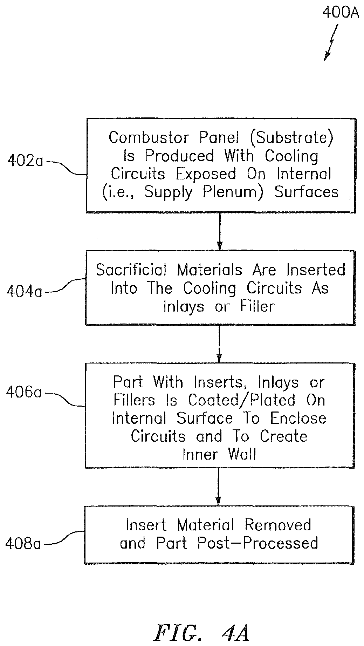

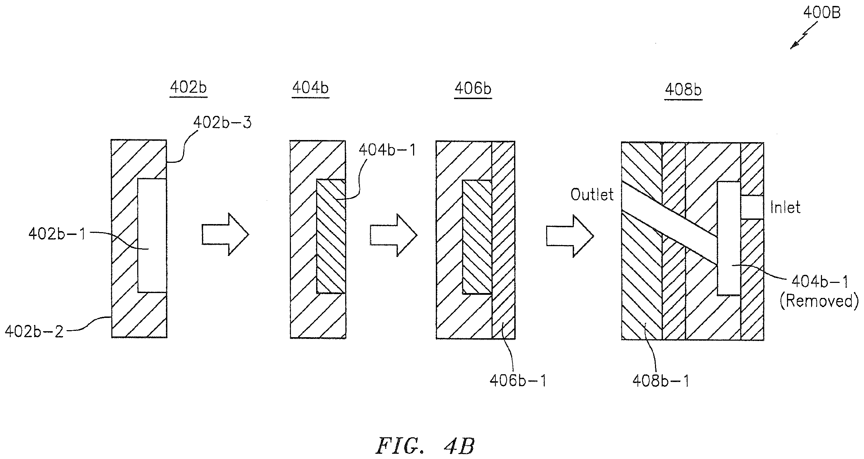

Referring to FIGS. 4A-4B, a flowchart of a method 400A for making a cooling circuit 400B according to the invention is shown. In FIG. 4B, the making of the cooling circuit 400B is shown in discrete steps or stages 402b-408b, coinciding with the respective steps/blocks 402a-408a of the method 400A of FIG. 4A. The method 400A may be executed in order to provide a cooling circuit 400B on a cold side of a panel.

In block 402a, a combustor panel (substrate) is produced with cooling circuits 402b-1 exposed on an internal (i.e., supply plenum) surface 402b-3 (relative to an external wall 402b-2) as shown in 402b. In some embodiments, the substrate and the cooling circuits 402b-1 in the substrate are produced via one of the following: casting with an external surface profile to create the cooling circuit, casting with at least one external or surface core to create the cooling circuit, casting with a machined surface to create the cooling circuit, forging or sheet metal with a machined or formed cooling circuit, using a ceramic or a composite with a machined or fabricated cooling circuit, or using an additive manufacturing technique.

In block 404a, one or more insert materials 404b-1 are inserted into the cooling circuits 402b-1 as inlays or filler as shown in 404b. In connection with block 404a, core/refractory shapes as cooling circuit inlays 404b-1 may be provided with treatment, cure, etc. Core/refractory materials may be inserted into the cooling circuits 402b-1 as filler material. Maskant/shadow materials (e.g., polymer-based) may be used for the insert 404b-1.

In block 406a, in accordance with the invention a metal coating or plating 406b-1 is added on the internal surface 402b-3 to enclose the circuit 402b-1 and to create an inner wall as shown in 406b. The coating/plating 406b-1 may be used to create a missing side or internal surfaces of the enclosed cooling circuit 402b-1. In connection with block 406a, a bond coating may be used to apply to metal; plasma spray or deposition techniques may be used in some embodiments. Block 406a may adhere to one or more high-temperature plating specifications.

In block 408a, the insert 404b-1 is removed and part post-processing 408b-1 may be applied as shown in 408b. The application of the post-processing 408b-1 may take the form, for example, of a thermal barrier coating (TBC), an environmental barrier coating (EBC), a corrosion coating, application of a laser, grind machining, electrodischarge machining, etc. The insert 404b-1 may be removed via etching, application of a chemical (e.g., application of a solution), a thermal technique (e.g., heat treat/furnace), or any other technique.

While the cooling circuits 300B and 400B are shown in FIGS. 3B and 4B as having a single inlet and a single outlet, more than one inlet and/or more than one outlet may be included in a given embodiment. Furthermore, the geometries or angles that are utilized in forming the cooling circuit/channels 300B, 400B between and including the inlet and outlet may take any size, form, or shape; those shown in FIGS. 3B and 4B are illustrative.

While some of the examples described herein related to dilution holes, aspects of the disclosure may be applied in connection with any type of aperture. For example, aspects of the disclosure may be applied in connection with dilution, trim, or feed holes that supply air to a combustion of a fuel-air mixture. Aspects of the disclosure may be applied in connection with a hole that accommodates an ignitor, a probe, or a sensor. Aspects of the disclosure may be applied in connection with a hole in a bulkhead. In some embodiments, a cooling circuit may be adjacent to a grommet, integral to the grommet, or partially incorporated in the grommet.

While some of the examples, described herein related to a panel (e.g., a combustor panel), aspects of the invention may be applied to other entities, such as liner walls.

Technical effects and benefits of this invention include a cost-effective design for cooling a liner or a panel. Cooling may be provided via an incorporation of one or more cooling circuits in accordance with one or more of the configurations described herein. The invention may be applied to regions near ignitors, studs/attachments, and rails which are also prone to distress. The invention may be applied in proximity to one or more holes of the liner or panel, such as one or more dilution holes.

The invention has been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with the invention as defined by the claims. One or more features described in connection with a first embodiment may be combined with one or more features of one or more additional embodiments.

## Claims

1. A method for forming a cooling circuit in at least one of a combustor panel or liner wall of an aircraft engine, comprising:
producing (402a) a substrate with the cooling circuit (402b-1) formed in the substrate;
inserting (404a) a material (404b-1) into the cooling circuit (402b-1) as at least one of an inlay or filler;
at least one of coating or plating (406a) the cooling circuit (402b-1) on a surface (402b-3) of the substrate to create a wall;
wherein the cooling circuit (402b-1) is located in proximity to an aperture associated with the at least one of a panel or liner wall; **characterised in that**:
the surface (402b-3) corresponds to a wall of the substrate that is configured to be opposite to a combustion flowpath of the engine.

2. The method of claim 1, wherein the substrate and the cooling circuit (402b-1) in said substrate are produced via the following:
casting with a surface profile to create the cooling circuit.

3. The method of claim 1 or 2, wherein the material (404b-1) comprises at least one of:
at least one of a core or refractory material; or
at least one of a maskant or shadow material.

4. The method of claim 1, 2 or 3, wherein the at least one of coating or plating (406a) comprises an application of a bond coat.

5. The method of any preceding claim, further comprising:
removing (408a) the insert material (404b-1).

6. The method of claim 5, wherein the insert material (404b-1) is removed using at least one of:
etching;
application of a chemical; or
a thermal technique.

7. The method of claim 5 or 6, further comprising:
applying part post-processing.

8. The method of claim 7, wherein the part post-processing comprises application of at least one of:
a thermal barrier coating;
an environmental barrier coating;
a corrosion coating;
a laser;
grind machining; or
electrodischarge machining.

9. A combustor panel or a liner wall of an aircraft engine, comprising:
a substrate;
a cooling circuit (402b-1) formed in the substrate in proximity to an aperture of the combustor panel or liner wall; and
at least one of a metal coating or plating (406b-1);
**characterised in that**:
the cooling circuit (402b-1) is formed in the substrate on a side of the substrate that is configured to be opposite to a combustion flowpath of the engine; and
the at least one of a metal coating or plating (406b-1) is coupled to a surface (402b-3) of the substrate to create a wall, the surface (402b-3) being on said side.

10. The combustor panel or liner wall of claim 9, wherein the cooling circuit (402b-1) is formed based on a removal of an insert material (404a).

11. The combustor panel or liner wall of claim 9 or 10, wherein the aperture comprises at least one of:
a first hole that is configured to supply air to a combustion of a fuel-air mixture,
a second hole configured to accommodate at least one of:
an ignitor,
a probe, or
a sensor, or
a third hole in a bulkhead.

12. The combustor panel or liner wall of claim 11, wherein the first hole comprises at least one of a dilution hole, a trim hole, or a feed hole.

13. The combustor panel or liner wall of any of claims 9 to 12, wherein the cooling circuit (402b-1) is at least one of:
adjacent to a grommet,
integral to the grommet, or
partially incorporated in the grommet.

## Patentansprüche

1. Verfahren zum Herstellen eines Kühlkreislaufs in mindestens einem aus einer Brennkammerplatte oder Mantelwand eines Luftfahrzeugtriebwerks, umfassend:
Herstellen (402a) eines Substrats, wobei der Kühlkreislauf (402b-l) in dem Substrat ausgebildet ist;
Einsetzen (404a) eines Materials (404b-l) in den Kühlkreislauf (402b-l) als mindestens eines aus einer Einlage oder einem Füllstoff;
mindestens eines aus Beschichten oder Plattieren (406a) des Kühlkreislaufs (402b-1) an einer Oberfläche (402b-3) des Substrats, um eine Wand zu bilden;
wobei der Kühlkreislauf (402b-1) in der Nähe einer Öffnung angeordnet ist, die mit dem mindestens einen aus einer Platte oder Mantelwand verbunden ist; **dadurch gekennzeichnet, dass**:
die Oberfläche (402b-3) einer Wand des Substrats entspricht,
die konfiguriert ist, um einem Verbrennungsströmungsweg des Triebwerks gegenüberzuliegen.

2. Verfahren nach Anspruch 1, wobei das Substrat und der Kühlkreislauf (402b-l) in dem Substrat mittels Folgendem hergestellt sind:
Gießen mit einem Oberflächenprofil, um den Kühlkreislauf auszubilden.

3. Verfahren nach Anspruch 1 oder 2, wobei das Material (404b-1) mindestens eines aus Folgenden umfasst:
mindestens eines aus einem Kern- oder feuerfesten Material; oder
mindestens eines aus einem Maskierungs- oder Schattenmaterial.

4. Verfahren nach Anspruch 1, 2 oder 3, wobei das mindestens eine aus Beschichten oder Plattieren (406a) ein Aufbringen eines Haftvermittlers umfasst.

5. Verfahren nach einem der vorstehenden Ansprüche, ferner umfassend:
Entfernen (408a) des Einsatzmaterials (404b-1).

6. Verfahren nach Anspruch 5, wobei das Einsatzmaterial (404b-1) unter Verwendung von mindestens einem aus:
Ätzen;
Aufbringen einer Chemikalie; oder
einem thermischen Verfahren entfernt wird.

7. Verfahren nach Anspruch 5 oder 6, ferner umfassend:
Anwenden von Teilnachbearbeitung.

8. Verfahren nach Anspruch 7, wobei die Teilnachbearbeitung die Anwendung von mindestens einem aus Folgenden umfasst:
einer Wärmesperrenbeschichtung;
einer Umweltsperrenbeschichtung;
einer Korrosionsbeschichtung;
einem Laser;
Schleifbearbeitung; oder
Funkenerodieren.

9. Brennkammerplatte oder Mantelwand eines Luftfahrzeugtriebwerks, umfassend:
ein Substrat;
einen Kühlkreislauf (402b-1), der in dem Substrat in der Nähe einer Öffnung der Brennkammerplatte oder Mantelwand ausgebildet ist; und
mindestens eines aus einer Metallbeschichtung oder - plattierung (406b-1);
**dadurch gekennzeichnet, dass**:
der Kühlkreislauf (402b-l) in dem Substrat auf einer Seite des Substrats ausgebildet ist, die konfiguriert ist, um einem Verbrennungsströmungsweg des Triebwerks gegenüberzuliegen; und
die mindestens eine aus einer Metallbeschichtung oder - plattierung (406b-l) mit einer Oberfläche (402b-3) des Substrats gekoppelt ist, um eine Wand zu bilden, wobei sich die Oberfläche (402b-3) auf dieser Seite befindet.

10. Brennkammerplatte oder Mantelwand nach Anspruch 9, wobei der Kühlkreislauf (402b-l) basierend auf einer Entfernung eines Einsatzmaterials (404a) ausgebildet wird.

11. Brennkammerplatte oder Mantelwand nach Anspruch 9 oder 10, wobei die Öffnung mindestens eines aus den Folgenden umfasst:
einem ersten Loch, das konfiguriert ist, um Luft zu einer Verbrennung eines Kraftstoff-Luft-Gemisches zu liefern,
einem zweiten Loch, das konfiguriert ist, um mindestens eines der Folgenden unterzubringen:
eine Zündeinrichtung,
eine Sonde oder
einen Sensor, oder
einem dritten Loch in einer Trennwand.

12. Brennkammerplatte oder Mantelwand nach Anspruch 11, wobei das erste Loch mindestens eines aus einem Verdünnungsloch, einem Ausgleichsloch oder einem Transportloch umfasst.

13. Brennkammerplatte oder Mantelwand nach einem der Ansprüche 9 bis 12, wobei der Kühlkreislauf (402b-1) mindestens eines aus Folgenden ist:
angrenzend an eine Tülle,
integriert in die Tülle oder
teilweise in die Tülle eingebaut.

## Revendications

1. Procédé de formation d'un circuit de refroidissement dans au moins l'un d'un panneau de chambre de combustion ou d'une paroi de revêtement d'un moteur d'aéronef, comprenant :
la production (402a) d'un substrat avec le circuit de refroidissement (402b-1) formé dans le substrat ;
l'insertion (404a) d'un matériau (404b-1) dans le circuit de refroidissement (402b-1) en tant qu'au moins l'une d'une incrustation ou d'une charge ;
au moins l'un d'un revêtement ou d'un plaquage (406a) du circuit de refroidissement (402b-1) sur une surface (402b-3) du substrat pour créer une paroi ;
dans lequel le circuit de refroidissement (402b-1) est situé à proximité d'une ouverture associée à l'au moins un d'un panneau ou d'une paroi de revêtement ; **caractérisé en ce que** :
la surface (402b-3) correspond à une paroi du substrat qui est configurée pour être opposée à un chemin d'écoulement de combustion du moteur.

2. Procédé selon la revendication 1, dans lequel le substrat et le circuit de refroidissement (402b-1) dans ledit substrat sont produits par l'intermédiaire de ce qui suit :
la coulée avec un profil de surface pour créer le circuit de refroidissement.

3. Procédé selon la revendication 1 ou 2, dans lequel le matériau (404b-1) comprend au moins l'un :
d'au moins l'un d'un matériau central ou réfractaire ; ou
d'au moins l'un d'un matériau de masquage ou d'ombre.

4. Procédé selon la revendication 1, 2 ou 3, dans lequel l'au moins un du revêtement ou du plaquage (406a) comprend une application d'une couche de liaison.

5. Procédé selon une quelconque revendication précédente, comprenant en outre :
le retrait (408a) du matériau d'insertion (404b-1).

6. Procédé selon la revendication 5, dans lequel le matériau d'insertion (404b-1) est retiré à l'aide d'au moins l'une :
d'une gravure ;
d'une application d'un produit chimique ; ou
d'une technique thermique.

7. Procédé selon la revendication 5 ou 6, comprenant en outre :
l'application d'un post-traitement partiel.

8. Procédé selon la revendication 7, dans lequel le post-traitement partiel comprend l'application d'au moins l'un :
d'un revêtement de barrière thermique ;
d'un revêtement de barrière environnemental ;
d'un revêtement anticorrosion ;
d'un laser ;
d'un usinage par broyage ; ou
d'un usinage par décharges électriques.

9. Panneau de chambre de combustion ou paroi de revêtement d'un moteur d'aéronef, comprenant :
un substrat ;
un circuit de refroidissement (402b-1) formé dans le substrat à proximité d'une ouverture du panneau de chambre de combustion ou de la paroi de revêtement ; et
au moins l'un d'un revêtement ou d'un plaquage métallique (406b-1) ;
**caractérisé en ce que** :
le circuit de refroidissement (402b-1) est formé dans le substrat sur un côté du substrat qui est configuré pour être opposé à un chemin d'écoulement de combustion du moteur ; et
l'au moins un d'un revêtement ou d'un plaquage métallique (406b-1) est couplé à une surface (402b-3) du substrat pour créer une paroi, la surface (402b-3) étant dudit côté.

10. Panneau de chambre de combustion ou paroi de revêtement selon la revendication 9, dans lequel le circuit de refroidissement (402b-1) est formé sur la base d'un retrait d'un matériau d'insertion (404a).

11. Panneau de chambre de combustion ou paroi de revêtement selon la revendication 9 ou 10, dans lequel l'ouverture comprend au moins l'un :
d'un premier trou qui est configuré pour fournir de l'air à une combustion d'un mélange carburant-air,
d'un deuxième trou configuré pour loger au moins l'un :
d'un allumeur,
d'une sonde, ou
d'un capteur, ou
d'un troisième trou dans une cloison.

12. Panneau de chambre de combustion ou paroi de revêtement selon la revendication 11, dans lequel le premier trou comprend au moins l'un d'un trou de dilution, d'un trou d'équilibrage ou d'un trou d'alimentation.

13. Panneau de chambre de combustion ou paroi de revêtement selon l'une quelconque des revendications 9 à 12, dans lequel le circuit de refroidissement (402b-1) est dans au moins l'une des configurations suivantes :
adjacent à un œillet,
fait partie intégrante de l'œillet, ou
est partiellement incorporé à l'œillet.
